# EUROPEAN PATENT SPECIFICATION

(11) **EP 2 752 525 B1**
(45) Date of publication and mention of the grant of the patent: **23.05.2018**
(21) Application number: 12803949.2
(22) Date of filing: 26.06.2012
(51) Int. Cl.: E03B 1/02, E03B 7/00, E03B 7/07, G06Q 50/06, E02D 29/12

(54) **Piping sensor**
Röhrensensor
Senseur tubulaire

(30) Priority: 30.06.2011 JP 2011146707
(43) Date of publication of application: 09.07.2014
(73) Proprietor: Kurata, Sakuji, Osaka-shi, Osaka 545-0033 (JP); Kurata, Masako, Osaka-shi, Osaka 545-0033 (JP)
(72) Inventor: Kurata, Sakuji, Osaka-shi, Osaka 545-0033 (JP); Kurata, Masako, Osaka-shi, Osaka 545-0033 (JP)
(74) Representative: Blodig, Wolfgang
(86) International application number: PCT/JP2012/066258
(87) International publication number: WO 2013/002211

(56) References cited:
- JP-A- 8 096 039
- JP-A- 8 249 569
- JP-A- 9 135 915
- JP-A- 2011 128 791

## Description

### Technical Field

The present invention relates to a self-power generation type piping sensor, such as generally known from JP 8 960 39 A, which is capable of being detecting abnormalities in a pipeline even when no power source is available from the outside by being provided with a self-power generation function, and a disaster detection system which is capable of comprehensively detecting the generation of a disaster including piping abnormalities by being provided with a plurality of the piping sensors with a self-power generation function, and a piping attachment device with a self-power generation function which enables automatic power feeding to the outside.

### Background Art

On the earth today, a number of natural disasters or fault disasters generated by men occur. There have been no conventional techniques of detecting the generation of accidents under the ground and in structures such as buildings in a certain region and predicting the generation of disastrous accidents in structures in the region than a leak detection technique for detecting leakage of water generated in a conduit of waterworks buried under the ground as one of its genres and specifying the position of leakage of water. In contrast, a comprehensive crisis prediction alarm sensor for predicting the generation of disasters and accidents due to various causes in the entire pipeline such as pipelines of the waterworks buried under the ground and pipelines of the waterworks arranged inside structures such as buildings is disclosed (refer to patent document 1).

This method includes comprehensive sensors provided with detection portions for conducting measurements associated respectively with sound, radiation, heat, mechanical distortion, electricity, magnetism, and vibration are provided at both ends of the piping of a specific distance section respectively set in a large number of the site required of the pipelines spread throughout the inside of the structure such as buildings and the pipelines spread over the entire buried structure. This method measures an abnormality information signal inside and outside a pipeline in a buried object and structure or within a stratum and within a structure by the variation of each detection signal simultaneously measured by each detection portion of the comprehensive sensor from a normal state, finds a sign of a disaster accident due to sinking of the ground, land subsidence, radiation leakage, or abnormality temperature rise in a certain specific distance section of the specific distance sections set in a large number by the analysis of the measurement signal, specifies the site of generation of the accident, and predicts in advance.

### Prior Art Document

### Patent document

Patent document 1: Japanese Patent No. 520440
JP 8-96039 A relates to a piping sensor which is interposed in an existing pipeline.

### Summary of the Invention

### Problems to be Solved by the Invention

However, the above comprehensive crisis prediction alarm sensor is a comprehensive sensor which is provided with all detection portions for conducting measurements associated respectively with sound, emission, heat, mechanical distortion, electricity, magnetism, and vibration, and it therefore requires efforts and costs for production and installment of incorporation of all kinds of detection portions and their data acquisition devices, and constructing a plurality of systems for each predetermined section of the pipeline has not been easy.

In addition, detection of abnormalities in pipelines such as water pipes with a known self-power generation type piping sensor is based on a stable supply of the power source for operating the sensor, and they could not conduct abnormality detection itself in a state that the power source is shut off. That is, even if a comprehensive crisis prediction sensor as mentioned above is provided in each section, when the drive power of each detection portion and detection information transmitter is cut off, detection information itself cannot be obtained in the first place, and such a sensor could not deal with comprehensive disasters such as abnormalities in a plurality of life lines including electricity lines. Furthermore, in present days, providing new electric energy without building more water, thermal and nuclear power generation facilities is required.

To this end, an object of the present invention is to provide a disaster power supply system which is capable of reducing the trouble and costs of production and installment for providing several types of detection portions and their data acquisition devices, relatively easily constructing a disaster prevention system in which a plurality of sensors are provided for each predetermined section of the pipeline, conducting detection abnormalities of even in a state that the power source is shut off, and further providing new electric energy without building more water, thermal and nuclear power generation facilities.

### Means for Solving the Problem

In order to achieve the above object, the following means (1) to (11) are taken.
(1) The self-power generation type piping sensor of the present invention is a piping sensor (G) which is interposed within a structure or an existing pipeline (P) for a predetermined fluid provided under the ground, and detects abnormalities of a piping and the surroundings of the piping, the piping sensor (G) including a pair of connection flanges (1) which are flange-connected to an upstream side and a downstream side, respectively, of a section part dividing the pipeline (P) in the midst of the same, an inner pipe (2) which connects a section part of the pipeline (P) between the connection flanges (1) in a manner of allowing fluid circulation, an inner pipe (2) which connects a section part of the pipeline (P) between the connection flanges (1) in a manner of allowing fluid circulation, a bypass pipe (3) having a flow path branching in a bypassing manner from a position of the inner pipe (2) closer to the upstream side towards a spaced-away outer periphery of the inner pipe (2), and merging again in a position of the inner pipe (2) closer to the downstream side, a rotor (4) provided within the flow path of the bypass pipe (3) and freely rotatably about the inner pipe (2) and itself rotates about the pipe axis of the inner pipe by the fluid circulation to the flow path of the bypass pipe (3), an electromotive device (5) which is closely fixed on at least either the inner circumferential surface or outer circumferential surface of the rotor (4) or a face constituting the inside of the structure, and generates electricity by the rotation of the rotor (4), in which self-power generation is performed by the electromotive device (5), and the situation of the sectioned and connected pipeline (P) or the surroundings of the pipeline (P) is detected by an electromotive state by the electromotive device (5) and a detection signal by the detector (6).
(2) In the self-power generation type piping sensor, it is preferable that the connection flanges 1 on the upstream and downstream side, respectively, includes opposing flange structures (11) and a connection cushioning material (12) interposed therebetween, and the detection portion (6) is incorporated into the connection cushioning material (12) nipped between the flange opposing structures (11) of the connection flanges (1). Such a constitution that the detector 6 is buried in the connection cushioning material 12 at the furthest ends of the piping sensor G allows more correct grasping a detection signal which is in correlation with the information in the sectioned piping. In addition, by detecting abnormality signals generated between the detectors 6 at both ends of the sensor, any abnormality of the sensor itself can be obtained as a detection signal.
(3) In any of the above described self-power generation type piping sensor, it is preferable that the bypass pipe (3) covers continuous holes (2h) provided around the pipe closer to the upstream side and closer to the downstream side of the inner pipe (2), and a cylindrical portion (32) whose diameter expands toward the center of the axis from each end of the pipe of the inner pipe (2), and which connects the expanded diameter portions (31) at both ends of the same, and covers the outer periphery of the inner pipe in a cylindrical form, and in an upstream bypass pipeline flowing from the communication path (2h) through the inside of the expanded diameter portion (31) into the cylindrical portion (32), a flow path is formed so that at least part of circulation flow rate decreases within the pipeline. Such a constitution allows increasing the flow velocity of a circulation fluid flowing into the cylindrical portion 32, and increasing the amount of rotation of the rotor 4 to enable efficient power generation.
(4) In any of the above described self-power generation type piping sensor, it is preferable that the rotor (4) is configured to include a multiple cylinder structure (41) which is freely rotatable about the axis, and fins (42) formed on each of the cylindrical surface of the multiple cylinder structure, and the fins (42) have twisted fin faces so formed that the angle of attachment increases or decreases continuously or stepwise relative to the axial direction of the pipe. Furthermore, it is preferable that the fins (42) are disposed in a manner of extending spirally about the axis of the pipe. Such a configuration allows ensuring the amount of rotation of the rotor (4) without suppressing the fluid circulation within the rotor (4) by the fins (42).
(5) In any of the above described self-power generation type piping sensor, it is preferable that a power receiving device (8) is provided in the periphery of the bypass pipe (3) or in the vicinity of the same, and charges the electromotive voltage by the electromotive device (5), and this power receiving device (8) automatically supplies power to the detector (6) and/or the data management device (7) depending on the charged situation of itself. Automatic power feeding allows operation of the sensor itself even when an external power source is shut off, and detection of generation of abnormalities and signal transmission can be continued.
(6) In any of the above described self-power generation type piping sensors, as still another constitution, it is preferable that a piezoelectric jacket (9) attached to the periphery of the bypass pipe (3) and comprising a plurality of piezoelectric elements (91) is provided, this piezoelectric element (91) generate electricity by the acoustic pressure or vibration based on the fluid circulation of the pipeline to which they are attached, and an electromotive voltage by this is transmitted to the power receiving device (8). By generating power also by the piezoelectric jacket (9) in such a manner, the power feeding function in case of an emergency can be increased, and it can be also used as a backup power source in case where the self-power generator itself is out of order.
(7) In any of the above described self-power generation type piping sensors, it is preferable that the inner pipe (2) is interposed on the pipeline (P) exposed inside a pipe space with a lid portion, and a data management device (7) which transmits or stores an electromotive voltage signal and a detection signal by the detector 6 which is in correlation with the electromotive force by the electromotive device 5, and this data management device (7) comprises an amplifier (71) which amplifies a detection signal, an A/D converter (72) which A/D converts the amplified signal, and a transmitter (73/73M) which transmits the A/D converted amplified signal, and these amplifier (71), A/D converter (71), and transmitter (73 /73M) are attached in the pipe space or around the lid portion of the same. Thus, by conducting data conversion, amplification, and transition by the data management device (7) with the pipe space or its attachment parts and peripheral devices, the pipeline (P) can be restored in a centralized manner when any abnormality occurs, and centralized management of the pipeline (P) for each pipe space can be performed.
(8) The disaster detection system of the present invention is a system for detecting disasters, the system including a piping sensor with a self-power generation function according to any one of the above which is attached at predetermined intervals of an existing pipeline (P), and a central monitoring system (S) which receives data transmitted from a data management device (7) of the piping sensors with a self-power generation function and receives an electromotive voltage signal which is in correlation with an electromotive voltage transmitted from the power receiving device (8) of the piping sensors. In addition, the central monitoring system (S) has a map indicator (SM) which performs correlation processing of the electromotive voltage signal and detection signal received respectively from adjacent piping sensors (G) through the pipeline, so that a position of generation of an abnormality is specified as a distance between two points within the pipeline nipped by the piping sensors (G), and compares this distance between the two points with the position information of the pipeline input in advance for map indication. Herein, an electromotive voltage signal in the present invention means a signal relating to a voltage by self-power generation, and is obtained as an electromotive voltage signal generated by converting a cumulative voltage or a momentary voltage at a predetermined time into an electrical signal.
(9) As the disaster detection system, it is preferable that a measurement vehicle (C) equipped with the central monitoring system S and a self-power generator is provided, and the measurement vehicle (C) is equipped with a direct receiving device which connects to the piping sensor (G) in the vicinity of the pipeline in which an abnormality is generated and directly receives a detection signal. By such a configuration, power can be supplied from the car in case of emergency, and detection by the piping sensor G and the operation of data management of detection signals, performing the operation of the power generator, or restoration of the pipeline (P) to which this sensor G is attached can be conducted.
(10) The disaster detection system according to any of the above may have a centralized incoming panel (8S) which collectively charges the electromotive voltages by a plurality of the power receiving devices (8), in which the centralized incoming panel (8S) has a switching device which switches to external power supply only by manual operation when any abnormality is generated in the pipeline. In such a configuration, electric leakage accidents in the case where trouble occurs in the electric system when any abnormality is generated can be prevented by forcibly stopping automatic power receiving and automatic power feeding by a switching device, or emergency power source can be ensured at the time of disaster.
(11) In addition, a piping attachment device with a self-power generation function of the present invention is a piping attachment device which is interposed within an existing pipeline (P) for a predetermined fluid provided either in a structure or under the ground, the piping attachment device being configured to include an inner pipe (2) which connects a section part of the pipeline (P) between the connection flanges (1) in a manner of allowing fluid circulation, an inner pipe (2) which connects a section part of the pipeline (P) between the connection flanges (1) in a manner of allowing fluid circulation, a bypass pipe (3) having a flow path branching in a bypassing manner from a position of the inner pipe (2) closer to the upstream side towards a spaced-away outer periphery of the inner pipe (2), and merging again in a position of the inner pipe (2) closer to the downstream side, a rotor (4) provided within the flow path of the bypass pipe (3) and freely rotatably about the inner pipe (2) and itself rotates about the pipe axis of the inner pipe by the fluid circulation to the flow path of the bypass pipe (3),an electromotive device (5) which is closely fixed on at least either the inner circumferential surface or outer circumferential surface of the rotor (4) or a face constituting the inside of the structure, and generates electricity by the rotation of the rotor (4), and a power receiving device (8) which is electrically connected with the electromotive device (5), and charges an electromotive voltage by the electromotive device (5), in which the power receiving device (8) is disposed in the periphery or near the periphery of the bypass pipe (3) or in the flange structure by the pair of connection flanges (1) or near the flange structure, and automatically supplies power to the outside of the device depending on the charged situation of itself.

Also described herein is a pair of connection flanges (1) which are flange-connected to an upstream side and a downstream side, respectively, of a section part dividing the pipeline (P) in the midst of the same, an inner pipe (2) which connects a section part of the pipeline (P) between the connection flanges (1) in a manner of allowing fluid circulation, a bypass pipe (3) having a flow path branching in a bypassing manner from a position of the inner pipe (2) closer to the upstream side towards a spaced-away outer periphery of the inner pipe (2), and merging again in a position of the inner pipe (2) closer to the downstream side, a rotor (4) provided within the flow path of the bypass pipe (3) and freely rotatably about the inner pipe (2) and itself rotates about the pipe axis of the inner pipe itself by fluid circulation to the flow path of the bypass pipe (3), an electromotive device (5) which is closely fixed on at least either the inner circumferential surface or outer circumferential surface of the rotor (4) or a face constituting the inside of the structure, and generates electricity by the rotation of the rotor (4), at least either a detector (6) or a power receiving device (8) which is electrically connected with the electromotive device (5) and obtains the information of a electromotive state by the electromotive device (5), in which at least either the detector (6) or power receiving device (8) obtains the information of the electromotive state by the electromotive device (5), whereby the situation of the sectioned and connected pipeline (P) or the surroundings of the pipeline (P) is detected.

### Effect of the Invention

The piping or system provided with the above electromotive device has allowed providing a mechanism which creates a new energy by using existing equipment without destroying the nature. It has also allowed continuing abnormality detection of the pipeline P by self-power generation even in a state that the power source to the portion where the self-power generation type piping sensor is installed is shut off. Furthermore, it has allowed supplying power in time of disaster in a region where electricity supply is cut off.

### BRIEF DESCRIPTION OF THE DRAWINGS

[Fig. 1] Fig 1 is an illustrative drawing of a cross-sectional structure of Example of a self-power generation type piping sensor G of the present invention.
[Fig. 2] Fig2is a cross-sectional view taken along line a-a of Fig. 1 showing Example of a connection flange 1.
[Fig. 3] Fig 3 is a fractured illustrative drawing showing an internal structure Example of the self-power generation type piping sensor G of the present invention.
[Fig. 4] Fig. 4 is a cross-sectional structure illustrative drawing showing an example of an installation state of the self-power generation type piping sensor G of the present invention for a manhole.
[Fig. 5] Fig. 5 is a plan view of a manhole lid M in Fig. 4.
[Fig. 6] Fig. 6 is a cross-sectional illustrative drawing showing the constitution of Example of a disaster detection system or disaster power supply system of the present invention.
[Fig. 7] Fig. 7 is a perspective illustrative drawing showing arrangement examples of the constitutions of the disaster detection system or disaster power supply system of the present invention.
[Fig. 8] Fig 8 is an image example of the indication when abnormality is detected with a map indicator of the disaster detection system of the present invention.
[Fig. 9] Fig. 9 is an image example of detection signal indication by the disaster detection system of the present invention.
[Fig. 10] Fig 10 is an image example of diagnosis indication of the position of water leakage by the disaster detection system of the present invention.

### Mode for Carrying out the Invention

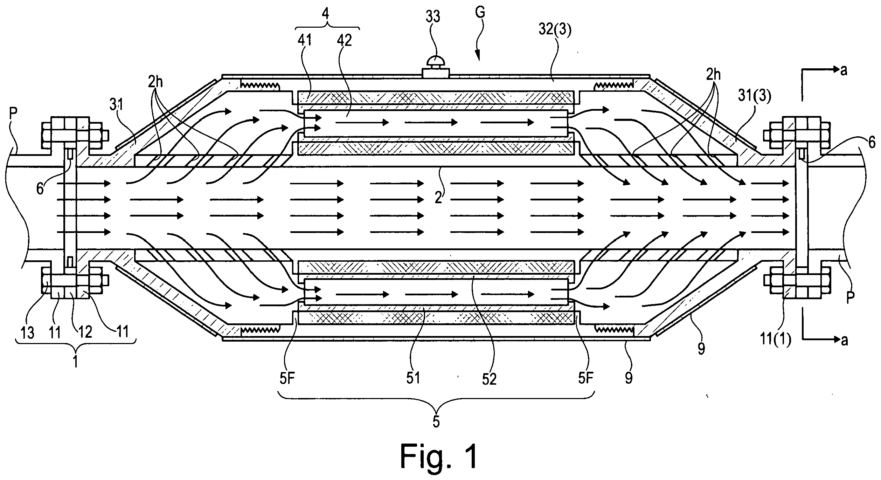

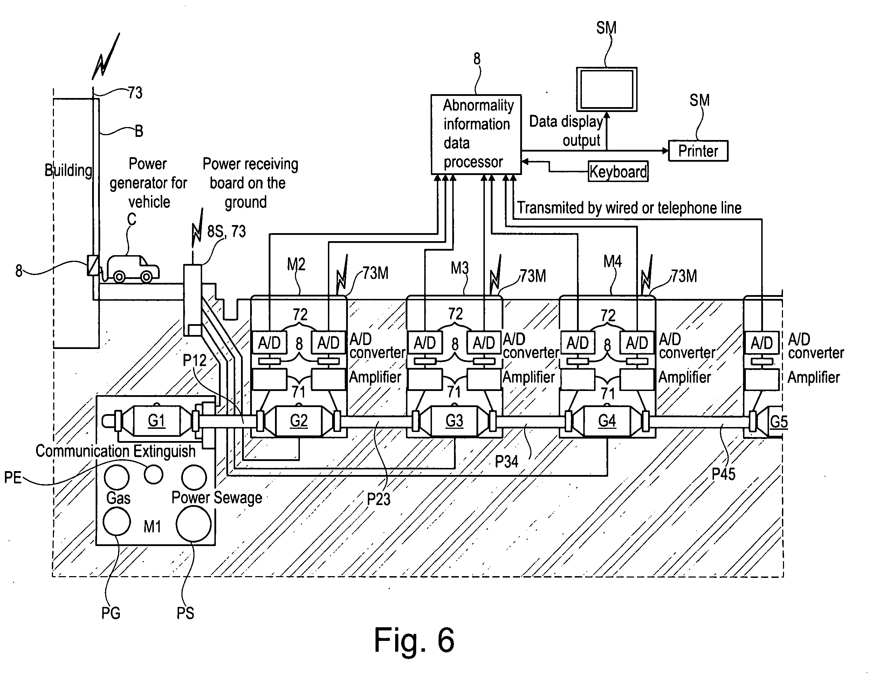

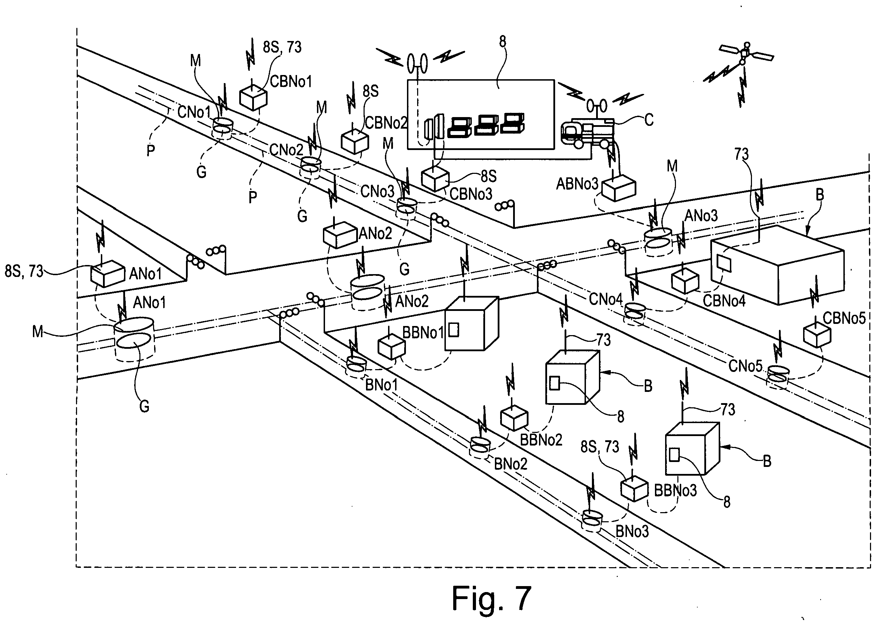

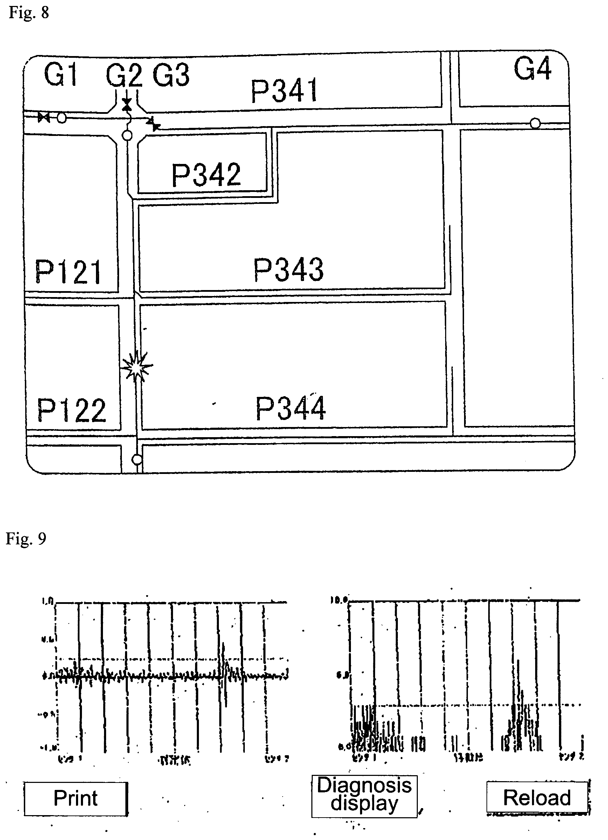

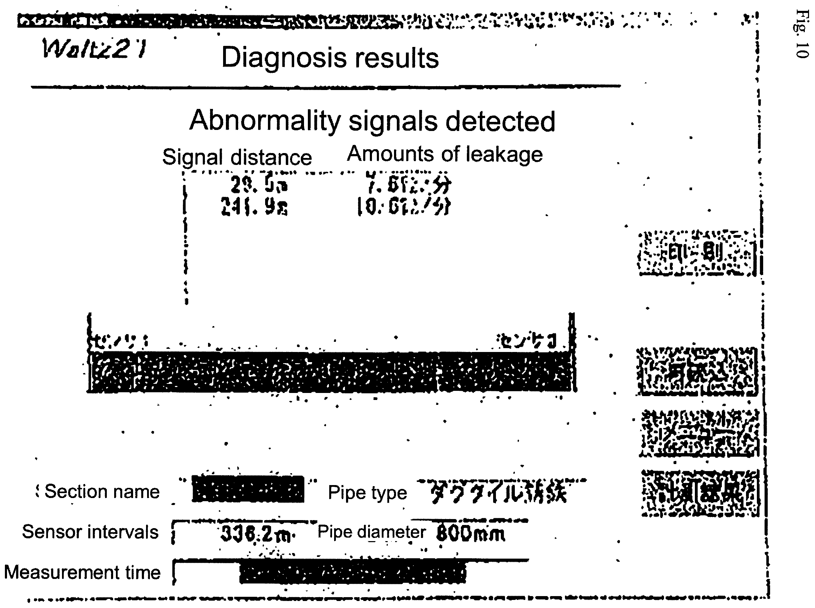

The best mode for carrying out the invention will be described below with reference to drawings shown as Examples. Figs. 1 to 5 show self-power generation type power generating sensors G which are Examples of the present invention, while Figs. 6 and 7 show constitutions of Example of a disaster detection system and disaster power supply system of Examples provided with this. Figs. 8 to 10 shows examples of display images used for the self-power generation type power generating sensor G and the disaster detection system of the present invention.

### [Example 1]

### (Overall constitution of the self-power generation type power generating sensor Example 1)

A self-power generation type power generating sensor 10 of Example 1 of the present invention is basically a self-power generation type piping sensor which is interposed within a structure or an existing pipeline P for a predetermined fluid provided under the ground, and detects abnormalities of a piping and the surroundings of the piping, the sensor 10 including a pair of connection flanges 1 which are flange-connected to an upstream side and a downstream side, respectively, of a section part dividing the pipeline P in the midst of the same,
an inner pipe 2 which connects the connection flanges 1 to each other with the same diameter as the inner diameter of the piping of the section part,
a bypass pipe 3 having a flow path branching in a bypassing manner from a position of the inner pipe 2 closer to the upstream side towards a spaced-away outer periphery of the inner pipe 2, and merging again in a position of the inner pipe 2 closer to the downstream side,
provided within the flow path of the bypass pipe 3 and freely rotatably about the inner pipe 2, a rotor 4 in the form of multiple cylinders which itself autonomously rotates about the pipe axis of the inner pipe by the fluid circulation to the flow path of the bypass pipe 3,
an electromotive device 5 which is closely fixed on at least either the inner circumferential surface or outer circumferential surface of the rotor 4 or a face constituting the inside of the structure, and generates electricity by the autonomous rotation of the rotor 4,
detectors 6 which are disposed on the pipelines upstream and downstream, respectively, of the rotor 4, and are capable of detecting a detection signal in correlation with the fluid circulation within the pipeline P further upstream and downstream of the section part, and
a data management device 7 which transmits or stores an electromotive voltage signal and a detection signal by the detector 6 which is in correlation with the electromotive force by the electromotive device 5. In addition, by the electromotive voltage signal and detection signal obtained by the data management device 7, in which the situation of the connected pipeline P is analyzed, and a self-power generation function is provided by the electromotive device 5.

Accordingly, the rotor is rotationally driven by a circulating hydrostatic pressure circulating inside the pipeline P, which allows self-power generation by the electromotive device 5 provided around or inside the same, while the state of the fluid inside the pipe can be detected by the detector 6. Moreover, since the electromotive voltage by the self-power generation function affects the number of revolutions of the rotor, and thus affects the flow rate of the fluid, by obtaining the state of the electromotive voltage as an electromotive voltage signal, the fluid circulation information inside the pipe can be obtained. Each constitution will be described in detail below with reference to each drawing shown as Example.

### (Connection flange 1)

The connection flanges 1 on the upstream and downstream side, respectively, are configured to have a flange structure 11 opposing the flanges fixed to the cross section of the pipeline P, a connection cushioning material 12 in the form of a thin disk interposed between the opposing flanges and the flange structure 11, and a plurality of flange fixtures 13 penetrating these (Figs. 1, 2).

### (Inner pipe 2)

The inner pipe 2 includes a straight pipe which is interposed on the pipeline P exposed inside a manhole space below a manhole. The inner pipe 2 is connected while maintaining the same inner diameter as the pipeline P of the section part, whereby the flow rate is not suppressed. Moreover, in a region which is near the both ends of the inner pipe 2 and overlapping expanded diameter portion 31 of the bypass pipe 3 are formed a plurality of continuous holes perforated in a diagonal direction relative to the pipe face formation.

### (Bypass pipe 3)

The bypass pipe 3 is configured of an expanded diameter portion 31 which covers continuous holes (2h) provided around the pipe closer to the upstream side and closer to the downstream side of the inner pipe (2), and a cylindrical portion 32 whose diameter expands toward the center of the axis from each end of the pipe of the inner pipe 2, and which connects the expanded diameter portions 31 at both ends of the same, and covers the outer periphery of the inner pipe in a cylindrical form. Herein, it is preferable that in an upstream bypass pipe path running from the continuous hole 2 through the inside of the expanded diameter portion 31 and into the cylindrical portion 32, at least part of the flow path is draw-formed so that the circulation flow rate decreases continuously or stepwise from the upstream side toward the downstream side inside the pipe path. For example, in the expanded diameter portion 31 shown to the left in Fig. 1, the flow path is contracted in the continuous hole 2h and increases in the flow velocity, and then the velocity once decreases in the conical expanded diameter portion, and thereafter, a passage is extremely contracted by a generator frame 5F retaining an outer coil 51 and an inner coil 52 of the electromotive device 5. In Example 1, the circulation flow velocity within the rotor 4 is ensured to be equal to or higher than a constant level by increasing the flow velocity rapidly in a contracted portion by this the generator frame 5F.

In addition, an automatic air vent valve 33 is provided on the surface of and perpendicularly above the cylindrical portion 32. The automatic air vent valve 33 functions to draw air from the inside of the bypass pipe 3, and at least its inside is configured of a conductor, so that it serves as a connector which transmits an electromotive voltage of the electromotive device 5 to the outside. In addition, the automatic air vent valve 33 is provided on the surface of and perpendicularly above the cylindrical portion 32. The automatic air vent valve 33 functions to draw air from the inside of the bypass pipe 3, and functions to prevent rupture and leakage due to an excessive rise in the pressure of the electromotive device 5.

(Rotor 4) The rotor 4 is configured to have a multiple cylinder structure 41 which is freely rotatable about the axis of the pipe, and a number of fins 42 formed on each of the cylindrical surface of the multiple cylinder structure 41, the fins 42 have fin faces extending in the axial direction on the front and back side thereof to impart rotation force to the rotor 4 itself by receiving fluid pressure on one of the fin faces, and have twisted fin faces so formed that the angle of attachment increases or decreases continuously or stepwise. Especially in Example 1, in a dual cylindrical structure having an inner cylinder 412 and an outer cylinder 411 which are coaxial to each other, a plurality of fins is fixed along the radial direction of the cylinder between the inner cylinder 412 and the outer cylinder 411. The plurality of fins is disposed radially when seen in a cross section, and the fins 42 are respectively arranged extending spirally about the axis of the pipe along the axis of the pipe by a constant change of the phase of attachment portions to the inner cylinder 412 and the outer cylinder 411 along a single rotation direction in the axial direction of the pipe. Magnets 41M are incorporated in the inner cylinder 412 and the outer cylinder 411 in in the vertical and horizontal arrangement.

(Electromotive device 5) The electromotive device 5 is configured to have the outer coil 51 disposed in a non-contact manner in a position close to the outer surface of the outer cylinder 411 of the rotor 4 and wound cylindrically in a number of turns, the inner coil 52 disposed in a non-contact manner in a position close to the inner face of the inner cylinder 412 of the rotor 4, and wound cylindrically in a number of turns, the generator frame 5F retaining the outer coil 51 and the inner coil 52 in the form of a double frame and housing coaxially and rotatably the rotor 4 within the double frame. It is also so configured that the electromotive voltage by the outer coil 51 and the inner coil 52 is charged within the generator frame 5F, and to allow electric conductivity by wire to the automatic air vent valve 33 in an upper central part of the rotor.

(Detector 6) The detector 6 is configured of an underwater microphone 61 and a radiation sensor 62 exposed in the passage, and is incorporated in the connection cushioning material 12 nipped between a flange opposing structure 11 of the connection flanges 1. A detection portion of the underwater microphone protrudes in the axial direction from the inner frame of the connection cushioning material 12 whose diameter is larger than the inner diameter of the piping, and provided in a position further outside than the inner diameter of the piping (Fig. 2). The underwater microphone 61 and the radiation sensor 62 are incorporated for each of the connection cushioning materials 12 on the upstream side and downstream side, respectively, of the self-power generation type piping sensor G, and only the detection signal upstream of the self-power generation type piping sensor G can be extracted by bringing the detection signals on the upstream side and downstream side into correlation with each other. As other forms, one that has only the underwater microphone 6 or the radiation sensor 62, one that is provided with the underwater microphone 61 and a spare underwater microphone 61 in combination, or one that has no detection portion itself is possible.

In Example 1, a panel-type radiation detector 6M and a manhole handle-type cylindrical vibration detector 6H are also provided on the manhole lid M described later (Fig. 5).

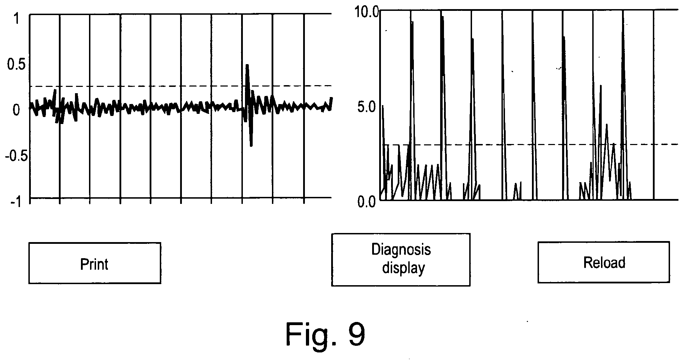

It should be noted that this detection signal are brought into correlation with each other at both ends of the pipeline having the section parts at both ends thereof, so that, as shown in in the left drawing of Fig. 9, the position of generation of the abnormality signal can be specified as the distance from the sensors of both section ends. Furthermore, this synthesized waveform can be filtered with a correlation formula category filter, and can be enlarged and indicated as a feature value as shown in the right drawing of Fig. 9 by amplifying by an amplifier 71.

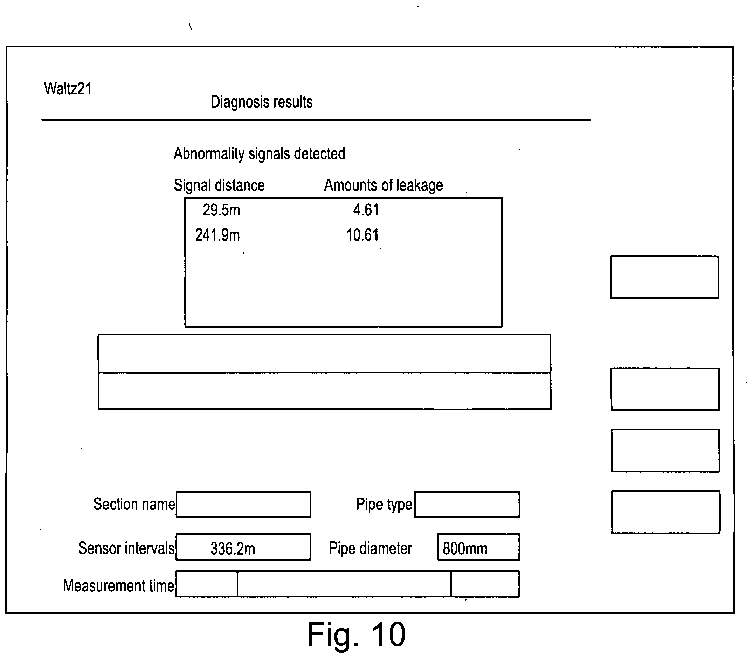

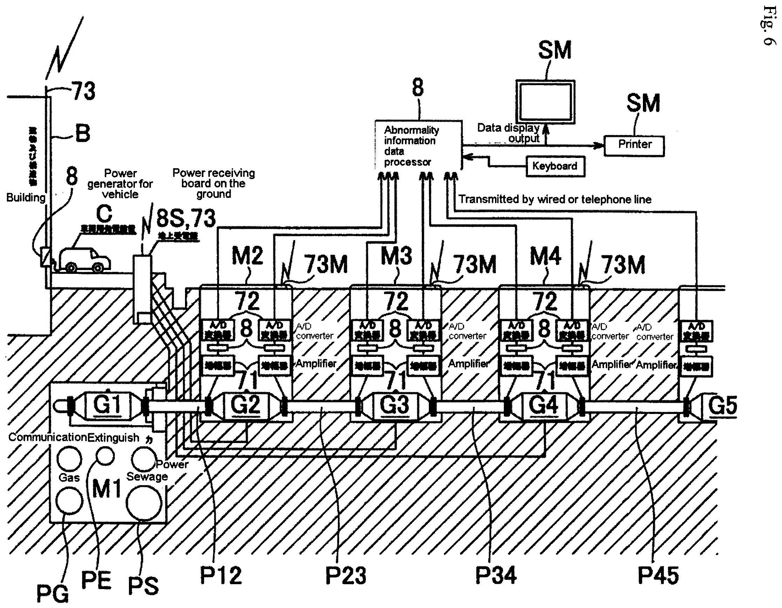

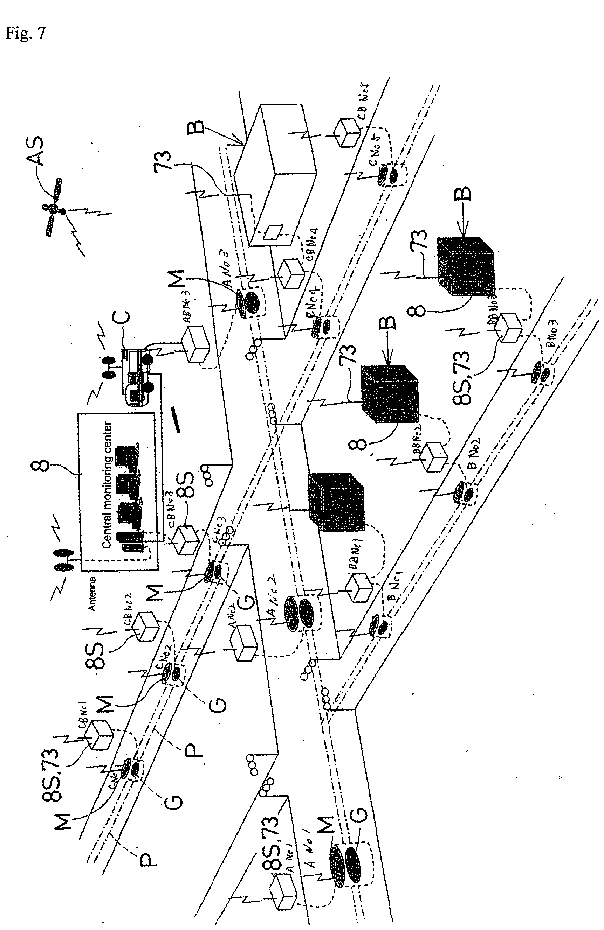

By converting into the feature value shown in the right drawing of Fig. 9, the type of abnormal states such as whether it is leakage of water, a state that external stress is generated, if the value is beyond the radiation value in the surroundings can be also determined. The position of the thus-specified abnormality signal and the detection type of the same can be indicated as diagnosis results as shown in Fig. 10. For example, in Fig. 10, the abnormality signals detected from a sensor G1 are in two portions in a distance of 241.9 m and in a distance of 29.5 m, respectively, from the piping sensor G on one side of the section pipeline, which indicates that estimated amounts of leakage (amounts of water leakage) of the fluid within the pipe in the positions are 7.6 liter per minute and 10.6 liter per minute, respectively. In a lower part of the drawing, a schematic drawing of the pipeline having sensors at both ends is shown in the form of a bar, and the specific position of generation of the abnormality is indicated in a different color. Further below, section name, pipe type, sensor intervals, pipe diameter, and measurement time are indicated.

Such a screen, for example, as an indication screen of a map indicator SM of the disaster detection system of the present invention, can be indicated in a central monitoring system S, or can be indicated on an indicator mounted on a measurement vehicle C. In addition, as shown in Fig. 8, the specific portion of generation of the abnormality can be indicated as map data laid over the piping type and the arrangement data of piping. For example, in Fig. 8, the position of water leakage is specified with a star-shaped balloon symbol between a second sensor G2 near the left column and second row from the top in the map and a third sensor G3 immediately below the same and near the left lower corner in the map. The detection signals from the sensors G2 and G3 are combined with those from the sensors G1 and G4 and brought into correlation with them, to specify the type of generation of the abnormality by the detection signals, and overlapped with the piping map, so that an accurate position of water leakage is indicated. For example, by providing such indication in the measurement vehicle C, more rapid and accurate piping restoration operation can be performed. Moreover, by overlaying detection signals of the amount of radioactivity or signals of ground deformation on the road map, dangerous region can be specified, and suggested detour routes and other information can be also indicated.

(Data management device 7) The data management device 7 is configured to include an amplifier which amplifies a detection signal, an A/D converter which A/D converts the amplified signal, and a transmitter which transmits the A/D converted amplified signal.

The amplifier, A/D converter, and the power receiving device 8 are collectively attached in an upper part space of within manhole structure.

The transmitter 73 is categorized into a manhole built-in transmitter 73M attached to the manhole lid M, a transmitter 73 for power receiving signal attached to a centralized incoming panel 8S provided on the ground, and a transmitter 73 for power receiving signal using existing antennas for radio wave installed in buildings and structures (Figs. 6, 7).

(Power receiving device 8) The power receiving device 8 is provided in the periphery of the bypass pipe 3 or in the vicinity of the same, and charges the electromotive voltage by the electromotive device 5. This power receiving device 8 starts automatic power feeding to the detector 6 and/or the data management device 7 when the electric capacity of itself is a predetermined amount or higher. When the power supply is cut off, the voltage from this power receiving device 8 is transmitted to the data management device 7, whereby sensor detection and transmission of detection signals can be continued even when the power supply of the piping sensor G itself is shut off.

(Piezoelectric jacket 9) The piezoelectric jacket 9 has a thin plate-like cylinder which is stuck and fixed on the outer periphery of the bypass pipe 3 of the generator, and is configured of a jacket body formed by providing a plurality of piezoelectric elements 91 in parallel therein along the cylindrical surface of the cylinder. The piezoelectric elements 91 generate electricity by the acoustic pressure or vibration based on the fluid circulation of the pipeline P to which they are attached, and the electromotive voltage generated by this is transmitted to the power receiving device 8. It should be noted that in a sunlit section which is a region in which of the piezoelectric jacket 9 is installed and is on the top surface of the pipe photosensitive elements may be incorporated in place of the piezoelectric elements 91. This allows generating power by solar panels on top surface of the pipe, and generating power by vibration or sound detection on the bottom surface of the pipe, so that emergency power source can be assured when sensors are out of order.

In the periphery of the manhole lid M, further a plurality of lid portion piezoelectric elements 92 are buried and fixed dividedly in fan-shaped sections. This lid portion piezoelectric element 92 generates electricity by the acoustic pressure or vibration based on the use of the road surface around the manhole lid M, and this electromotive voltage is also transmitted to the power receiving device 8.

The self-power generation type power generating sensor G is provided in a pipe space with a lid for checking or maintenance of the piping. Especially in Example, the inner pipe 2 is interposed on the pipeline P exposed inside the manhole structure with the manhole lid M, and the data management device 7 is configured to have the amplifier which amplifies a detection signal, the A/D converter which A/D converts the amplified signal, and the transmitter which transmits the A/D converted amplified signal. In addition, the amplifier, A/D converter, and power receiving device 8 are collectively attached in an upper part space of within manhole structure.

It is preferable that the transmitter is attached to the manhole lid M, and further a plurality of lid portion piezoelectric elements 92 are buried and fixed in part of the manhole lid M, and that this lid portion piezoelectric elements 92 generates electricity by the acoustic pressure or vibration based on the use of the road surface around the manhole lid M, and this electromotive voltage is transmitted to the power receiving device 8.

### [Example 2]

### (Overall constitution of self-power generation type power generating sensor of Example 2)

Moreover, a self-power generation type power generating sensor 10 of Example 2 of the present invention is basically a piping sensor G which is interposed within a pipeline P for a predetermined fluid provided either in a structure, a device or under the ground, and detects abnormalities of the piping and the surroundings of the piping, the self-power generation type power generating sensor 10 including a pair of connection flanges 1 which are flange-connected to an upstream side and a downstream side, respectively, of a section part dividing the pipeline P in the midst of the same, an inner pipe 2 which connects a section part of the pipeline P between the connection flanges 1 in a manner of allowing fluid circulation, a bypass pipe 3 having a flow path branching in a bypassing manner from a position of the inner pipe 2 closer to the upstream side towards a spaced-away outer periphery of the inner pipe 2, and merging again in a position of the inner pipe 2 closer to the downstream side, a rotor 4 provided within the flow path of the bypass pipe 3 and freely rotatably about the inner pipe 2 and itself rotates about the pipe axis of the inner pipe by the fluid circulation to the flow path of the bypass pipe 3, an electromotive device 5 which is closely fixed on at least either the inner circumferential surface or outer circumferential surface of the rotor 4 or a face constituting the inside of the structure, and generates electricity by the rotation of the rotor 4, and at least either a detector 6 or a power receiving device 8 which acquires the information of an electromotive state by the electromotive device 5 electrically connected with the electromotive device 5. In addition, at least either the detector 6 or the power receiving device 8 acquires the information of the electromotive state by the electromotive device 5, whereby the situation of the sectioned and connected pipeline P or the surroundings of the pipeline P is detected.

This Example is a constitution which is complete even if at least either the detector 6 or power receiving device 8 in the constitution of the above Example 1 is removed. When at least the detector 6 is included, as in the above Example 1, it is to be provided in the flange structure or between a pair of flanges, and its basic constitution is to be similar to that in Example 1. However, a function of detecting abnormalities within the piping or around the piping by a detection means of the detector 6 itself may not be necessarily provided, and alternatively may be provided with a function of acquiring the information of the electromotive state by the electromotive device 5 electrically connected with the electromotive device 5. In this case, the power receiving device 8 may be provided within the piping sensor, but may be removed from inside the piping sensor device if it is attached to the outside the piping sensor.

Moreover, when at least the power receiving device 8 is provided, an arrangement and a constitution similar to that in the above Example 1 are to be employed. However, a charging function of the power receiving device 8 for itself may not be necessarily provided, and alternatively it may be provided with a function of receiving the electromotive force electrically connected with the electromotive device 5, and acquiring the information of the electromotive state by the electromotive device 5. In this case, the detector 6 may be provided within the flange structure or between the pair of flanges, but a function of detecting abnormalities within the piping or around the piping by a detection means of the detector 6 itself may be removed.

### (Disaster detection system of the present invention)

The disaster detection system of the present invention is configured to include a self-power generation type piping sensor according to any one of the above attached at predetermined intervals of the existing pipeline P (Examples 1, 2), and a central monitoring system S which receives data transmitted from a data management device 7 of the piping sensors with a self-power generation function and receives an electromotive voltage signal which is in correlation with an electromotive voltage transmitted from the power receiving device 8 of the piping sensors with a self-power generation function.

### (Central monitoring system S)

The central monitoring system S characteristically has a map indicator SM which performs correlation processing of the electromotive voltage signal and detection signal received respectively from adjacent piping sensors with a self-power generation function through the pipeline P, so that a position of generation of an abnormality is specified as a distance between two points within the pipeline P nipped by the piping sensors with a self-power generation function, and compares this distance between the two points with the position information of the pipeline P input in advance for map indication.

The disaster detection system of the present invention is also provided with a measurement vehicle C equipped with the central monitoring system S and self-power generator. The measurement vehicle C is a travelling vehicle equipped with a direct receiving device which connects to the self-power generation type piping sensor in the vicinity of the pipeline P in which an abnormality is generated and directly receives a detection signal.

### [Example 3]

### (Overall constitution of piping attachment device with a self-power generation function of Example 3)

The piping attachment device with a self-power generation function which is Example of Example 3 of the present invention is a piping attachment device which is interposed within the existing pipeline P for a predetermined fluid provided either in a structure or under the ground, and is configured to include a pair of connection flanges 1 which are flange-connected to an upstream side and a downstream side, respectively, of a section part dividing the existing pipeline P in the midst of the same, an inner pipe 2 which connects the section part of the pipeline P between the connection flanges 1 in a manner of allowing fluid circulation, a bypass pipe 3 having a flow path branching in a bypassing manner from a position of the inner pipe 2 closer to the upstream side towards a spaced-away outer periphery of the inner pipe 2, and merging again in a position of the inner pipe 2 closer to the downstream side, a rotor 4 provided within the flow path of the bypass pipe 3 and freely rotatably about the inner pipe 2 and itself rotates about the pipe axis of the inner pipe by the fluid circulation to the flow path of the bypass pipe 3, an electromotive device 5 which is closely fixed on at least either the inner circumferential surface or outer circumferential surface of the rotor 4 or a face constituting the inside of the structure, and generates electricity by the rotation of the rotor 4, a power receiving device 8 which is electrically connected with the electromotive device 5, and a charges an electromotive voltage by the electromotive device 5, in which the power receiving device 8 is disposed in the periphery or near the periphery of the bypass pipe 3 or in the flange structure by the pair of connection flanges 1 or near the flange structure, and automatically supplies power to the outside of the device depending on the charged situation of itself.

### (Overall constitution of disaster detection system of the present invention)

In addition, the disaster detection system of the present invention includes a self-power generation type piping sensor (including Examples 1, 2) or a self-power generation type piping attachment device according to any one of the above attached at predetermined intervals of the existing pipeline P, and a plurality of power receiving devices 8 which receive electricities transmitted from the self-power generation type piping sensor /self-power generation type piping attachment, a centralized incoming panel 8S which collectively charges the electromotive voltages by a plurality of the power receiving devices 8, in which the centralized incoming panel 8S has a switching device which switches to external power supply only by manual operation when any abnormality is generated in the pipeline P.

The above constitution allows providing a mechanism which creates a new energy by using existing equipment without destroying the nature, or continuing abnormality detection of the pipeline P by self-power generation even in a state that the power source to the portion where the self-power generation type piping sensor is installed is shut off, or providing a system which supplies power in time of disaster in a region where electricity supply is cut off.

The above piping sensor or piping attachment device can be attached to, in addition to water pipelines of water and sewage, extinguishing agent pipelines, gas pipelines, natural gas pipelines, pipelines for liquid fuels such as petroleum and gasoline, and cooling pipelines. Moreover, the above disaster detection system is fixed to the midst of the pipe path of the existing pipeline P in a structure or the existing pipeline P buried in the ground, catches abnormality signals inside and outside of the piping, and analyzes the contents of the abnormality signals and indicates on a monitor screen, whereby it functions as a comprehensive crisis prediction and disaster prevention monitoring system, and can be operated to predict accidents inside and outside the pipeline P. Such a crisisprediction and disaster prevention monitoring system can be applied to, in addition to water pipelines of water and sewage, airport facilities, railway facilities, hospital facilities, evacuation facilities, port facilities, national important facilities, and evacuation filtering facilities.

For example, the piping sensor of the present invention can be installed for pipelines buried under the ground on the border defense line, and construct a 24-hours crime prevention monitoring system. In this case, objects and people which pass or trespasses the border defense line can be detected using the ground on the border defense line or underpasses therein.

The piping sensor of the present invention can be also applied to nuclear reactor power generators, thermal power generators, hydraulic power generators and plants including these devices. This allows catching any abnormality in cooling pipings, fuel pipings, hydraulic pipings, reactor cores, combustion devices, power generators and transmitting alarms.

Moreover, by installing a plurality of piping sensors on each of underground pipelines spread like a net across urban areas and the like at regular intervals, the piping sensor can be operated as a system device provided with a crime prevention function and a disaster prediction function.

Furthermore, the present invention is not limited to Examples described above, and extraction of elements, changes in combinations, abbreviation, changes in the order of the processes according to each constitution and abbreviation of parts of constitutions and changes in arrangement suitably can be made as long as the purport of the present device is not deviated.

### Explanation of References

1 Connection flange
11 Flange structure
12 Connection cushioning material
2 Inner pipe
2h Continuous hole
3 Bypass pipe
31 Expanded diameter portion
32 Cylindrical portion
33 Air vent valve
4 Rotor
41 Multiple cylinder structure
42 Fin
5 Electromotive device (coil)
6 Detector (Underwater microphone or radiation sensor)
7 Data management device
71 Amplifier
72 A/D converter
73 Transmitter
8 Power receiving device
8S Centralized incoming panel
9 Piezoelectric jacket
91 Piezoelectric element
92 Lid portion piezoelectric element
P Pipeline
M Manhole lid
S Central monitoring system
SM Map indicator
C Measurement vehicle

## Claims

1. A piping sensor (G) which is interposed within an existing pipeline (P) for a predetermined fluid provided in either a structure or the ground and detects abnormalities of the piping and the surrounding of the piping, the piping sensor (G) comprising:
a pair of connection flanges (1) which is flange-connected to an upstream side and a downstream side, respectively, of a section part dividing the pipeline (P) in the midst of the same, an inner pipe (2) which connects the section part of the pipeline (P) between the connection flanges (1) in a manner of allowing fluid circulation, a bypass pipe (3) having a flow path branching in a bypassing manner from a position of the inner pipe (2) closer to the upstream side towards a spaced-away outer periphery of the inner pipe (2), and merging again in a position of the inner pipe (2) closer to the downstream side, a rotor (4) provided within the flow path of the bypass pipe (3) and freely rotatably about the inner pipe (2) and itself rotates about the pipe axis of the inner pipe by the fluid circulation to the flow path of the bypass pipe (3), an electromotive device (5) which is closely fixed on at least either the inner circumferential surface or outer circumferential surface of the rotor (4) or a face constituting the inside of the structure, and generates electricity by the rotation of the rotor (4), and a detector (6) which is disposed in a passage of the flange structure by the pair of connection flanges (1) or in a passage between the pair of connection flanges (1), and is capable of detecting a detection signal in correlation with the fluid circulation within the pipeline P further upstream and/or downstream of the section part, and
in which self-power generation is performed by the electromotive device (5), and the situation of the sectioned and connected pipeline (P) or the surroundings of the pipeline (P) is detected by an electromotive state by the electromotive device (5) and a detection signal.

2. A piping sensor with a self-power generation function according to claim 1, wherein the connection flanges 1 on the upstream and downstream side, respectively, comprise opposing flange structures (11) and a connection cushioning material (12) interposed therebetween, and the detection portion (6) is incorporated into the connection cushioning material (12) nipped between the flange opposing structures (11) of the connection flanges (1).

3. The piping sensor with a self-power generation function according to claim 1 or 2, wherein the bypass pipe (3) covers continuous holes (2h) provided around the pipe closer to the upstream side and closer to the downstream side of the inner pipe (2), and a cylindrical portion (32) whose diameter expands toward the center of the axis from each end of the pipe of the inner pipe (2), and which connects the expanded diameter portions (31) at both ends of the same, and covers the outer periphery of the inner pipe in a cylindrical form, and in an upstream bypass pipeline flowing from the communication path (2h) through the inside of the expanded diameter portion (31) into the cylindrical portion (32), a flow path is formed so that at least part of circulation flow rate decreases within the pipeline.

4. The piping sensor with a self-power generation function according to claim 1, 2, or 3, wherein the rotor (4) comprises a multiple cylinder structure (41) which is freely rotatable about the axis, and fins (42) formed on each of the cylindrical surface of the multiple cylinder structure, and the fins (42) have twisted fin faces so formed that the angle of attachment increases or decreases continuously or stepwise relative to the axial direction of the pipe.

5. The piping sensor with a self-power generation function according to claim 1, 2, 3, or 4, wherein a power receiving device (8) is provided in the periphery of the bypass pipe (3) or in the vicinity of the same, and charges the electromotive voltage by the electromotive device (5), and this power receiving device (8) automatically supplies power to the detector (6) depending on the charged situation of itself.

6. The piping sensor with a self-power generation function according to claim 1, 2, 3, 4, or 5, wherein a piezoelectric jacket (9) attached to the periphery of the bypass pipe (3) and comprising a plurality of piezoelectric elements (91) is provided, this piezoelectric element (91), generate electricity by the acoustic pressure or vibration based on the fluid circulation of the pipeline to which they are attached, and an electromotive voltage by this is transmitted to the power receiving device (8).

7. The piping sensor with a self-power generation function according to any one of claims 1 to 6, wherein the inner pipe (2) is interposed on the pipeline (P) exposed inside a pipe space with a lid portion, and a data management device (7) which transmits or stores an electromotive voltage signal and a detection signal by the detector 6 which is in correlation with the electromotive force by the electromotive device 5, and this data management device (7) comprises an amplifier (71) which amplifies a detection signal, an A/D converter (72) which A/D converts the amplified signal, and a transmitter (73/73M) which transmits the A/D converted amplified signal, and these amplifier (71), A/D converter (71), and transmitter (73 /73M) are attached in the pipe space or around the lid portion of the same.

8. A disaster detection system comprising a piping sensor with a self-power generation function according to any one of claims 1 to 7, which is attached at predetermined intervals of an existing pipeline (P), and a central monitoring system (S) which receives data transmitted from a data management device (7) of the piping sensors with a self-power generation function and receives an electromotive voltage signal which is in correlation with an electromotive voltage transmitted from the power receiving device (8) of the piping sensors, the central monitoring system (S) having a map indicator (SM) which performs correlation processing of the electromotive voltage signal and detection signal received respectively from adjacent piping sensors (G) through the pipeline, so that a position of generation of an abnormality is specified as a distance between two points within the pipeline nipped by the piping sensors (G), and compares this distance between the two points with the position information of the pipeline input in advance for map indication.

9. The disaster detection system according to claim 8, wherein a measurement vehicle (C) equipped with the central monitoring system S and a self-power generator is provided, and the measurement vehicle (C) is equipped with a direct receiving device which connects to the piping sensor (G) in the vicinity of the pipeline in which an abnormality is generated and directly receives a detection signal.

10. The a disaster detection system according to claim 8 or 9, wherein a centralized incoming panel (8S) which collectively charges the electromotive voltages by a plurality of the power receiving devices (8), in which the centralized incoming panel (8S) has a switching device which switches to external power supply only by manual operation when any abnormality is generated in the pipeline.

## Patentansprüche

1. Rohranlagensensor (G), der in eine bestehende Rohrleitung (P) für ein vorbestimmtes Fluid eingesetzt ist und entweder in einer Struktur oder im Erdboden vorgesehen ist und Unregelmäßigkeiten der Rohranlage und der Umgebung der Rohranlage erfasst, wobei der Rohranlagensensor (G) aufweist:
ein Paar von Verbindungsflanschen (1), die mittels einer Flanschverbindung mit einer in Strömungsrichtung vorderen bzw. einer in Strömungsrichtung hinteren Seite eines Abschnittsteils verbunden sind, das die Rohrleitung (P) in ihrer Mitte unterteilt, ein inneres Rohr (2), welches das Abschnittsteil der Rohrleitung (P) zwischen den Verbindungsflanschen (1) verbindet, und zwar in einer Weise, dass eine Fluidzirkulation ermöglicht wird, ein Umgehungsrohr (3), das einen Strömungsweg aufweist, der in der Art einer Umgehung von einer nahe bei der in Strömungsrichtung vorderen Seite befindlichen Position des inneren Rohrs (2) zu einer beabstandeten äußeren Peripherie des inneren Rohrs (2) abzweigt und sich an einer nahe bei der in Strömungsrichtung hinteren Seite befindlichen Position des inneren Rohrs (2) wieder vereinigt, einen Rotor (4), der in dem Strömungsweg des Umgehungsrohrs (3) vorgesehen ist und der um das innere Rohr (2) frei rotieren kann und der sich um die Rohrachse des inneren Rohrs dreht, und zwar durch die Fluidzirkulation zu dem Strömungsweg des Umgehungsrohrs (3), eine elektromotorische Vorrichtung (5), die enganliegend an zumindest einem der Folgenden befestigt ist, und zwar der Innenumfangsfläche oder der Außenumfangsfläche des Rotors (4), oder einer Fläche, welche die Innenseite der Struktur bildet, und die durch die Rotation des Rotors (4) Elektrizität erzeugt, und einen Detektor (6), der in einem Flanschstrukturdurchgang durch das Paar von Verbindungsflanschen (1) oder in einem Durchgang zwischen dem Paar von Verbindungsflanschen (1) angeordnet ist und fähig ist, ein Detektionssignal in Korrelation mit der Fluidzirkulation in der Rohrleitung (P) weiter in Strömungsrichtung vor und/oder in Strömungsrichtung hinter dem Abschnittsteil zu erfassen, und wobei eine Eigenstromerzeugung durch die elektromotorische Vorrichtung (5) durchgeführt wird, und die Situation der in Abschnitte aufgeteilten und verbundenen Rohrleitung (P) oder der Umgebung der Rohrleitung (P) mittels eines elektromotorischen Zustands durch die elektromotorische Vorrichtung (5) und mittels eines Detektionssignals erfasst wird.

2. Rohranlagensensor mit Eigenstromerzeugungsfunktion nach Anspruch 1, wobei die in Strömungsrichtung vorderen bzw. in Strömungsrichtung hinteren Verbindungsflansche (1) gegenüberliegende Flanschstrukturen (11) und ein zwischen diesen angeordnetes Verbindungspolstermaterial (12) aufweisen, und das Detektionsglied (6) in das Verbindungspolstermaterial (12) inkorporiert ist, das zwischen die gegenüberliegenden Flanschstrukturen (11) der Verbindungsflansche (1) eingeklemmt ist.

3. Rohranlagensensor mit Eigenstromerzeugungsfunktion nach Anspruch 1 oder 2, wobei das Umgehungsrohr (3) Durchgangslöcher (2h) umkleidet, die um das Rohr herum vorgesehen sind, und zwar nahe bei der in Strömungsrichtung vorderen Seite und nahe bei der in Strömungsrichtung hinteren Seite des inneren Rohrs (2), und ein zylindrischer Abschnitt (32), dessen Durchmesser sich hin zur Mitte der Achse ausgehend von einem jeweiligen Rohrende des inneren Rohrs (2) erweitert, an die erweiterten Durchmesser aufweisenden Abschnitte (31) mit seinen beiden Enden angeschlossen ist und die äußere Peripherie des inneren Rohrs in zylindrischer Form umkleidet, und in eine in Strömungsrichtung vorne angeordnete Umgehungsrohrleitung, in der eine Strömung von dem Verbindungsweg (2h) durch das Innere des erweiterten Durchmesser aufweisenden Abschnittes (31) in den zylindrischen Abschnitt (32) verläuft, ein Strömungsweg gebildet ist, so dass zumindest ein Teil des Zirkulationsdurchsatzes in der Rohrleitung abnimmt.

4. Rohranlagensensor mit Eigenstromerzeugungsfunktion nach Anspruch 1, 2 oder 3, wobei der Rotor (4) eine Mehrzylinderstruktur (41) aufweist, die sich frei um die Achse drehen kann, und Rippen (42) auf einer jeweiligen der zylindrischen Flächen der Mehrzylinderstrulctur ausgebildet sind, und die Rippen (42) verdrehte Rippenflächen aufweisen, die so ausgebildet sind, dass der Befestigungswinkel bezogen auf die Axialrichtung des Rohrs kontinuierlich oder stufenweise zunimmt oder abnimmt.

5. Rohranlagensensor mit Eigenstromerzeugungsfunktion nach Anspruch 1, 2, 3 oder 4, wobei eine Stromaufnahmevorrichtung (8) in der Peripherie des Umgehungsrohrs (3) oder in der Nähe von dieser vorgesehen ist, und die elektromotorische Spannung durch die elektromotorische Vorrichtung (5) erzeugt wird, und die Stromaufnahmevorrichtung (8) dem Detektor (6) automatisch Strom zuführt, und zwar abhängig von seiner eigenen Ladesituation.

6. Rohranlagensensor mit Eigenstromerzeugungsfunktion nach Anspruch 1, 2, 3, 4 oder 5, wobei ein piezoelektrischer Mantel (9) vorgesehen ist, der am Umfang des Umgehungsrohrs (3) befestigt ist und der eine Mehrzahl von piezoelektrischen Elementen (91) aufweist, wobei dieses piezoelektrische Element (91) Elektrizität durch den akustischen Druck oder die Vibration erzeugt, die auf der Fluidzirkulation der Rohrleitung basieren, an der sie befestigt sind, und eine dadurch erzeugte elektromotorische Spannung zur Stromaufnahmevorrichtung (8) übertragen wird.

7. Rohranlagensensor mit Eigenstromerzeugungsfunktion nach einem der Ansprüche 1 bis 6, wobei das innere Rohr (2) in die Rohrleitung (P) eingesetzt ist, die innerhalb eines Rohrleitungsraums mit einem Deckelabschnitt freiliegt, und eine Datenverwaltungsvorrichtung (7) vorgesehen ist, die ein elektromotarisches Spannungssignal und ein Detektionssignal von dem Detektor (6) sendet oder speichert, das mit der elektromotorischen Kraft von der elektromotorischen Vorrichtung (5) in Korrelation steht, wobei diese Datenverwaltungsvorrichtung (7) einen Verstärker (71), der ein Detektionssignal verstärkt, einen A/D-Wandler (72), der eine A/D-Wandlung des verstärkten Signals durchführt, und einen Sender (73/73M) aufweist, der das einer A/D-Wandlung unterzogene verstärkte Signal sendet, und der Verstärker (71), der A/D-Wandler (72) und der Sender (73/73M) in dem Rohrleitungsraum oder um den Deckelabschnitt von diesem herum angebracht sind.

8. Katastrophenerkennungssystem, aufweisend einen Rohranlagensensor mit Eigenstromerzeugungsfunktion nach einem der Ansprüche 1 bis 7, der in vorbestimmten Intervallen einer bestehenden Rohrleitung (P) angebracht ist, und ein zentrales Überwachungssystem (S), das Daten empfängt, die von einer Datenverwaltungsvorrichtung (7) der Rohranlagensensoren mit Eigenstromerzeugungsfunktion gesendet wurden, und ein elektromotorisches Spannungssignal empfängt, das mit einer elektromotorischen Spannung in Korrelation ist, die von der Stromempfangsvorrichtung (8) der Rohranlagensensoren gesendet wird, wobei das zentrale Überwachungssystem (S) einen Kartenindikator (SM) aufweist, der eine Korrelationsverarbeitung des elektromotorischen Spannungssignals und des Detektionssignals durchführt, das jeweils von benachbarten Rohranlagensensoren (G) der Rohrleitung empfangen wurde, so dass eine Position einer Entstehung einer Unregelmäßigkeit als eine Strecke zwischen zwei Punkten in der Rohrleitung spezifiziert ist, die von den Rohranlagensensoren (G) eingefasst ist, und diese Strecke zwischen den zwei Punkten mit der Positionsinformation der Rohrleitung vergleicht, die für eine Kartenindikation vorab eingegeben wurde.

9. Katastrophenerkennungssystem nach Anspruch 8, wobei ein Messfahrzeug (C) vorgesehen ist, das mit dem zentralen Überwachungssystem (S) und einem Eigenstromgenerator ausgerüstet ist, und das Messfahrzeug (C) mit einer Direktempfangsvorrichtung ausgerüstet ist, die sich mit dem Rohranlagensensor (G) in der Nähe der Rohrleitung verbindet, in welcher eine Unregelmäßigkeit auftritt, und ein Detektionssignal direkt empfängt.

10. Katastrophenerkennungssystem nach Anspruch 8 oder 9, wobei eine zentrale Eingangskonsole (8S) vorgesehen ist, der die elektromotorischen Spannungen von einer Mehrzahl der Stromempfangsvorrichtungen (8) gesammelt zugeführt werden, wobei die zentralisierte Eingangskonsole (8S) eine Schaltvorrichtung aufweist, welche die externe Stromversorgung durch eine manuelle Operation nur umschaltet, wenn irgendeine Unregelmäßigkeit in der Rohrleitung auftritt.

## Revendications

1. Capteur pour canalisation (G) qui est placé à l'intérieur d'un pipeline existant (P) pour un fluide prédéterminé prévu dans une structure ou dans le sol, et qui détecte les anomalies de la canalisation et de l'environnement de celle-ci, le capteur pour canalisation (G) comprenant :
une paire de brides de raccordement (1) qui sont montées respectivement sur un côté amont et un côté aval d'une partie de section divisant le pipeline (P) au milieu de celui-ci, une conduite intérieure (2) qui relie la partie de section du pipeline (P) entre les brides de raccordement (1) de manière à permettre la circulation du fluide, une conduite de dérivation (3) qui présente une trajectoire qui bifurque à la manière d'une dérivation à partir d'un endroit de la conduite intérieure (2) plus proche du côté amont, en direction d'une périphérie extérieure, espacée, de ladite conduite intérieure (2), et qui revient à un endroit de la conduite intérieure (2) plus proche du côté aval, un rotor (4) qui est prévu à l'intérieur de la trajectoire de la conduite de dérivation (3) et qui est apte à tourner librement sur la conduite intérieure (2) et qui tourne lui-même sur l'axe de celle-ci sous l'effet de la circulation de fluide jusqu'à la trajectoire de la conduite de dérivation (3), un dispositif électromoteur (5) qui est fixé étroitement sur la surface circonférentielle intérieure et/ou la surface circonférentielle extérieure du rotor (4) ou une face constituant l'intérieur de la structure, et qui produit de l'électricité grâce à la rotation du rotor (4), et un détecteur (6) qui est disposé dans un passage de la structure à brides formée par la paire de brides de raccordement (1) ou dans un passage entre lesdites brides de raccordement (1), et qui est apte à détecter un signal de détection en corrélation avec la circulation de fluide à l'intérieur du pipeline P plus en amont et/ou en aval de la partie de section, et
dans lequel une autoproduction d'énergie est réalisée par le dispositif électromoteur (5), et la situation du pipeline (P) sectionné et raccordé ou de l'environnement du pipeline (P) est détectée grâce à un état électromoteur par le dispositif électromoteur (5), et à un signal de détection.

2. Capteur pour canalisation avec une fonction d'autoproduction d'énergie selon la revendication 1, dans lequel les brides de raccordement (1) sur les côté amont et aval, respectivement, comprennent des structures à brides opposées (11) et un matériau amortisseur de raccordement (12) placé entre les deux, et la partie de détection (6) est intégrée dans le matériau amortisseur de raccordement (12) coincé entre les structures opposées (11) des brides de raccordement (1).

3. Capteur pour canalisation avec une fonction d'autoproduction d'énergie selon la revendication 1 ou 2, dans lequel la conduite de dérivation (3) couvre des perçages continus (2h) prévus autour de la conduite plus près du côté amont et plus près du côté aval de la conduite intérieure (2), et une partie cylindrique (32) dont le diamètre augmente vers le centre de l'axe à partir de chaque extrémité de la conduite intérieure (2) et qui relie les parties à diamètre agrandi (31), aux deux extrémités de la conduite intérieure (2), et couvre la périphérie de ladite conduite intérieure suivant une forme cylindrique, et dans une conduite de dérivation amont allant de la trajectoire de communication (2h) jusqu'à la partie cylindrique (32) en passant par l'intérieur de la partie à diamètre agrandi (31) une trajectoire d'écoulement est formée de telle sorte qu'une partie au moins du débit diminue à l'intérieur du pipeline.

4. Capteur pour canalisation avec une fonction d'autoproduction d'énergie selon la revendication 1, 2 ou 3, dans lequel le rotor (4) comprend une structure multicylindre (41) qui est apte à tourner librement sur l'axe, et des ailettes (42) formées sur chacune des surfaces cylindriques de la structure multicylindre, et les ailettes (42) ont des faces vrillées formées de telle sorte que l'angle de fixation augmente ou diminue de manière continue ou par paliers par rapport au sens axial de la conduite.

5. Capteur pour canalisation avec une fonction d'autoproduction d'énergie selon la revendication 1, 2, 3 ou 4, dans lequel un dispositif de réception de courant (8) est prévu dans la périphérie de la conduite de dérivation (3) ou à proximité de celle-ci, et charge la tension électromotrice grâce au dispositif électromoteur (5), et ce dispositif de réception de courant (8) fournit automatiquement du courant au détecteur (6) en fonction de sa situation de charge.

6. Capteur pour canalisation avec une fonction d'autoproduction d'énergie selon la revendication 1, 2, 3, 4 ou 5, dans lequel il est prévu une enveloppe piézoélectrique (9) fixée à la périphérie de la conduite de dérivation (3) et comprenant plusieurs éléments piézoélectriques (91), ces éléments piézoélectriques (91) produisent de l'électricité grâce à la pression acoustique ou aux vibrations, à partir de la circulation de fluide du pipeline auquel ils sont fixés, et une tension électromotrice ainsi fournie est transmise au dispositif de réception de courant (8).

7. Capteur pour canalisation avec une fonction d'autoproduction d'énergie selon l'une quelconque des revendications 1 à 6, dans lequel la conduite intérieure (2) est placée sur le pipeline (P) exposé à l'intérieur d'un espace de conduite avec une partie formant couvercle, et un dispositif de gestion de données (7) transmet ou stocke un signal de tension électromotrice et un signal de détection du détecteur (6) qui est en corrélation avec la force électromotrice du dispositif électromoteur (5), et ce dispositif de gestion de données (7) comprend un amplificateur (71) qui amplifie un signal de détection, un convertisseur analogique-numérique (72) qui soumet le signal amplifié à une conversion analogique-numérique, et un transmetteur (73/73M) qui transmet le signal amplifié, et cet amplificateur (71), ce convertisseur analogique-numérique (72) et ce transmetteur (73/73M) sont fixés dans l'espace de conduite ou autour de la partie formant couvercle de celui-ci.

8. Système de détection de catastrophe comprenant un capteur pour canalisation avec une fonction d'autoproduction d'énergie selon l'une quelconque des revendications 1 à 7 qui est fixé, à des intervalles prédéterminés d'un pipeline existant (P), et un système de surveillance central (S) qui reçoit des données transmises à partir d'un dispositif de gestion de données (7) des capteurs pour canalisation avec une fonction d'autoproduction d'énergie, et qui reçoit un signal de tension électromotrice qui est en corrélation avec une tension électromotrice transmise à partir du dispositif de réception de courant (8) des capteurs pour canalisation, le système de surveillance central (S) comportant un indicateur cartographique (SM) qui réalise un traitement de corrélation du signal de tension électromotrice et du signal de détection reçus respectivement des capteurs pour canalisation (G) voisins, à travers le pipeline, de sorte qu'une position de production d'anomalie est spécifiée sous la forme d'une distance entre deux points, à l'intérieur du pipeline, coincés par lesdits capteurs pour canalisation (G), et compare cette distance entre les deux points aux informations de position de pipeline entrées à l'avance pour une indication cartographique.

9. Système de détection de catastrophe selon la revendication 8, dans lequel il est prévu un véhicule de mesure (C) équipé du système de surveillance central (S) et d'un dispositif d'autoproduction d'énergie, et le véhicule de mesure (C) est équipé d'un dispositif de réception directe qui est relié au capteur pour canalisation (G) à proximité du pipeline dans lequel une anomalie est générée, et reçoit directement un signal de détection.

10. Système de détection de catastrophe selon la revendication 8 ou 9, dans lequel il est prévu un panneau d'arrivée centralisé (8S) qui charge collectivement les tensions électromotrices grâce à plusieurs dispositifs de réception de courant (8), et ce panneau d'arrivée centralisé (8S) comporte un dispositif de commutation qui ne passe à une alimentation en courant externe que grâce à une commande manuelle quand une anomalie est générée dans le pipeline.
